(19) Europäisches Patentamt
European Patent Office
Office européen des brevets

(11) **EP 2 494 328 B1**

(12) **EUROPÄISCHE PATENTSCHRIFT**

(45) Veröffentlichungstag und Bekanntmachung des Hinweises auf die Patenterteilung:
**19.08.2015 Patentblatt 2015/34**

(21) Anmeldenummer: **10787991.8**

(22) Anmeldetag: **20.10.2010**

(51) Int Cl.:
*G01M 3/26* *(2006.01)*  *B01L 3/02* *(2006.01)*
*G01N 35/10* *(2006.01)*

(86) Internationale Anmeldenummer:
**PCT/EP2010/006406**

(87) Internationale Veröffentlichungsnummer:
**WO 2011/050917 (05.05.2011 Gazette 2011/18)**

(54) **VERFAHREN ZUR DICHTIGKEITSPRÜFUNG VON HANDGEHALTENEN KOLBENHUBPIPETTEN SOWIE DICHTIGKEITS-PRÜFEINRICHTUNG DAFÜR**

METHOD FOR LEAK-TESTING HAND-HELD PISTON STROKE PIPETTES AND ASSOCIATED LEAK-TESTING APPARATUS

PROCÉDÉ POUR CONTRÔLER L'ÉTANCHÉITÉ DE PIPETTES À PISTON TENUES À LA MAIN ET DISPOSITIF DE CONTRÔLE D'ÉTANCHÉITÉ CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2009 EP 09013570**

(43) Veröffentlichungstag der Anmeldung:
**05.09.2012 Patentblatt 2012/36**

(73) Patentinhaber: **BRAND GMBH + CO KG**
**97877 Wertheim (DE)**

(72) Erfinder:
• **FELDMANN, Rainer**
**97222 Rimpar (DE)**
• **ETTIG, Wolfgang**
**97900 Külsheim (DE)**

(74) Vertreter: **Von Rohr Patentanwälte Partnerschaft mbB**
**Rüttenscheider Straße 62**
**45130 Essen (DE)**

(56) Entgegenhaltungen:
**EP-A1- 1 785 731    US-A- 4 109 513**
**US-A- 5 537 880**

**Beschreibung**

Die Erfindung betrifft ein Verfahren zur Dichtigkeitsprüfung von handgehaltenen, einkanaligen oder mehrkanaligen Kolbenhubpipetten, vorzugsweise von solchen mit Luftpolster. Gegenstand der Erfindung ist auch eine für die Durchführung eines solchen Verfahrens geeignete Dichtigkeits-Prüfeinrichtung. Gegenstand der Erfindung ist schließlich ein System, das eine entsprechende Dichtigkeits-Prüfeinrichtung einschließt.

Kolbenhubpipetten sind als handgehaltene einkanalige Messvorrichtungen (DE 39 03 241 A1) ebenso bekannt wie als mehrkanalige Messvorrichtungen (DE 100 13 511 A1). Beim Aufsaugvorgang von Probenflüssigkeit wird in der Kolbenhubpipette und in der auf einen Aufsteckabschnitt der Pipette aufgesteckten Pipettenspitze ein Unterdruck erzeugt. Durch diesen Unterdruck wird Probenflüssigkeit in die Pipettenspitze eingesaugt. Kolbenhubpipetten als Direktverdränger haben kein oder nur ein minimales Luftvolumen oberhalb des Flüssigkeitsspiegels in der Pipettenspitze. Sie sind weniger für biologische Proben geeignet, da dort überwiegend kontaminationsfrei gearbeitet werden muss. Verbreiteter sind daher Luftpolster-Kolbenhubpipetten, bei denen sich zwischen dem Boden des Kolbens und dem Flüssigkeitsspiegel ein solcher Abstand befindet, dass sich der Flüssigkeitsspiegel stets nur in der auswechselbaren und meist als Wegwerfteil ausgeführten Pipettenspitze befindet, während sich der Kolbenboden deutlich oberhalb des Flüssigkeitsspiegels und damit gegen Kontaminationen geschützt bewegt.

Bei Kolbenhubpipetten und insbesondere bei Luftpolster-Kolbenhubpipetten ist die Anforderung an die Dichtigkeit aller Verbindungsstellen der Pipette und Pipettenspitze sehr hoch. Durch den Differenzdruck beim Einsaugen kann über ein Leck ungewollt Luft in den Totraum oberhalb des Flüssigkeitsspiegels einströmen. Das durch den Kolbenhub vergrößerte Volumen stimmt dann nicht mehr mit dem tatsächlich veränderten Volumen überein.

Die Dichtstellen von Kolbenhubpipetten unterliegen im Betrieb einem Verschleiß. Auch Alterung, Chemikalienangriff und sonstige Umgebungseinflüsse wirken sich negativ aus, selbst bei statischen Dichtungen Eine besonders empfindliche Dichtstelle, neben der dynamischen Kolbendichtung, stellt die Verbindung zwischen Pipettenspitze und Pipette am Aufsteckabschnitt dar. Gerade bei handgehaltenen Kolbenhubpipetten erfolgt der Aufsteckvorgang der Pipettenspitze manuell und im Wesentlichen freihändig. Die Oberflächen von Aufsteckabschnitt und Pipettenspitze werden dabei stark beansprucht. Außerdem werden immer wieder neue Pipettenspitzen eingesetzt (Wegwerfteil), so dass sich die Fertigungstoleranzen der Pipettenspitzen und die Oberflächenqualität der Dichtflächen der Pipettenspitzen bemerkbar machen. Im Ergebnis entstehen am Aufsteckabschnitt der Pipette nach längerem Gebrauch Riefen, die letztlich zu einem Leck führen können. Charakteristikum für Kolbenhubpipetten ist daher eine schleichend ansteigende Undichtigkeit.

Nicht jede Undichtigkeit führt zur Funktionsunfähigkeit einer Kolbenhubpipette. Eine sehr geringe Undichtigkeit kann hingenommen werden. Hat das Leck nur einen sehr geringen Strömungsquerschnitt, so strömt Luft nur sehr langsam in das Totvolumen der Pipette, und die Undichtigkeit kann noch im Rahmen der akzeptablen Fehlertoleranz sein.

Für Kolbenhubpipetten gehört es somit zu dem normalen Laborbetrieb, dass die Pipetten von Zeit zu Zeit einer Dichtigkeitsprüfung unterzogen werden. Das ist unabhängig davon, ob es sich um handgehaltene Kolbenhubpipetten oder um automatische Pipettiervorrichtungen handelt. Auch bei letzteren besteht ja ein entsprechendes Risiko von Lecks, sogar umso mehr als die Beobachtung eingeschränkt oder gar nicht möglich ist.

Für automatische Pipettiervorrichtungen hat man früher nur eine optische Prüfung der Dichtigkeit vorgenommen, die lediglich in der Lage war grobe Lecks zu ermitteln. Nach diesen althergebrachten Verfahren wird der Betrieb der automatischen Pipettiervorrichtung zeitweilig angehalten, nachdem die Pipettenspitze, in die die Probenflüssigkeit eingesaugt worden ist, von dem Flüssigkeitsspiegel nach oben bewegt worden ist. Ein Bediener prüft visuell, ob Probenflüssigkeit von der Pipettenspitze abtropft. Für dieses Verfahren bedarf es einer großen Erfahrung des Bedieners. Außerdem ist dieses Verfahren nur für große Lecks und große Flüssigkeitsmengen anwendbar. Bei kleinen Volumina der Probenflüssigkeit, beispielsweise von 10 μl, versagt dieses Verfahren.

Für eine automatische Pipettiervorrichtung ist daher bereits ein automatisiertes Verfahren zur Dichtigkeitsprüfung vorgeschlagen worden (DE 693 26 773 T2), bei dem der in der Pipettiervorrichtung, also im Totvolumen von Pipette und Pipettenspitze herrschende Druck in verschiedenen Pipettierzuständen gemessen und ausgewertet wird. Dazu ist die Pipettiervorrichtung selbst mit einem Drucksensor versehen, der den Druck im Totvolumen zwischen Flüssigkeitsspiegel und Kolbenboden der Kolbenpumpe der Pipette erfasst. Durch eine elektronische Steuereinrichtung wird der von dem Drucksensor erfasste Innendruck nach dem Ansaugen der Probenflüssigkeit mit dem Atmosphärendruck der Umgebungsatmosphäre verglichen. Dadurch lässt sich ein großes Leck feststellen, das das Ansaugen der Probenflüssigkeit mehr oder weniger vollständig unmöglich macht. In einem zweiten Schritt wird der Innendruck bei angehaltener Kolbenpumpe nach einer bestimmten Zeitspanne gemessen und mit dem unmittelbar nach dem Ende des Ansaugens herrschenden Innendruck verglichen. Abhängig von dem in diesem Verfahren ermittelten Druckanstieg wird eine Leckwarnung für die automatische Pipettiervorrichtung ausgegeben oder die automatische Pipettiervorrichtung für weiteres präzises Pipettieren freigegeben.

Bei dem zuvor erläuterten, bekannten Verfahren zur Dichtigkeitsprüfung bei einer automatischen Pipettiervorrichtung sind typische Volumina der eingesaugten Probenflüssigkeit während der Dichtigkeitsprüfung 200 bis 500 μl destilliertes Wasser. Die Zeitspanne, während der Druck im Totvolumen der Pipette gemessen wird, ist typischerweise 30 s verglichen mit der ersten Messung unmittelbar nach dem Anhalten der Pumpe nach etwa 500 ms. Über Druckverhältnisse lässt sich diese Literaturstelle nicht aus.

Ein Verfahren zur Dichtigkeitsprüfung bei automatischen Pipettiervorrichtungen ist auf handgehaltene Kolbenhubpipetten, vorzugsweise Luftpolster-Kolbenhubpipetten, nicht übertragbar. Dazu müsste die Pipette selbst mit einer entsprechenden Dichtigkeits-Prüfeinrichtung ausgerüstet werden. Das ist kostenmäßig nicht zu rechtfertigen und würde am Markt keine Akzeptanz finden. Aus diesem Grunde arbeitet man bei handgehaltenen Kolbenhubpipetten mit manuellen Verfahren zur Dichtigkeitsprüfung, die extern ausgeführt werden können.

Bei einem bekannten Verfahren (Eppendorf, Pipettentester 4708) werden eine Flüssigkeit bevorratende Flasche, ein damit verbundener befüllter Schlauch und ein Adapter eingesetzt. Der Adapter wird mit der aufgesteckten Pipettenspitze verbunden. Die Pipette mit Pipettenspitze wird in die Höhe gehalten. Der sich einpendelnde Flüssigkeitsspiegel wird markiert. Nach mehreren Betätigungen des Kolbens der Pipette wird die Position des Flüssigkeitsspiegels erneut geprüft, wobei die Pipette exakt in gleicher Höhe gehalten werden muss. Hat sich der Flüssigkeitsspiegel bei einem tieferen Niveau eingestellt, so ist das System aus Pipette und Pipettenspitze undicht.

Bekannt ist auch ein weiteres, ähnliches Verfahren. Bei diesem wird an die auf der Pipette aufgesteckte Pipettenspitze ein Schlauch angeschlossen, der zu einer Dichtigkeits-Prüfeinrichtung führt. Diese weist eine handbetätigte. Unterdruck erzeugende Kolbenpumpe sowie ein ansaugseitig an der Kolbenpumpe angeschlossenes, analog arbeitendes Manometer als Drucksensor auf. Die Vakuumpumpe wird von Hand betätigt, bis sich ein hinreichender Messdruck unterhalb des Atmosphärendrucks einstellt, der am Manometer angezeigt wird. In dieser Stellung versucht man, die Vakuumpumpe mit der Hand zu fixieren, so dass sich deren Pumpenvolumen nicht mehr ändert. Dann wird die Pipette mit der anderen Hand mehrfach betätigt. Zeigt danach das Manometer einen höheren Druck als vorher, so muss auf ein Leck im System aus Pipette und Pipettenspitze geschlossen werden.

Das mit der zuvor erläuterten Vorrichtung durchgeführte Verfahren zur Dichtigkeitsprüfung von handgehaltenen, einkanaligen oder mehrkanaligen Kolbenhubpipetten, vorzugsweise solchen mit Luftpolster, stellt den Ausgangspunkt für die Lehre der vorliegenden Patentanmeldung dar.

Neben dem zuvor erläuterten bekannten Verfahren ist ein Verfahren bekannt, das mit einer besonderen Messpipette arbeitet (DE 82 30 186 U1). Hierbei wird eine Messpipette über einen Adapter mit der Pipette verbunden. Die Probenflüssigkeit wird direkt von der Messpipette aufgenommen. Auf deren Skala kann unmittelbar das aufgenommene Volumen abgelesen werden. Dieses kann mit dem an der Pipette eingestellten Sollwert verglichen werden. Bei diesem Verfahren ist nachteilig, dass das Luftpolster, also das Totvolumen, mit dem tatsächlich in der Pipette im Normalbetrieb vorhandenen Luftpolster nicht übereinstimmt. Auch der hydrostatische Druck der aufgenommenen Flüssigkeit ist größer. Folglich entspricht das Verfahren mit Anwendung der Messpipette nicht dem tatsächlichen Verfahren beim Arbeiten mit der Pipette selbst.

Untersuchungen haben ergeben, dass beim Pipettieren mit unterschiedlichen Pipetten und Pipettenspitzen unterschiedliche Parameter auftreten, die die Ergebnisse der Dichtigkeitsprüfung in weiten Grenzen beeinflussen. Der Bediener muss durch Erfahrung herausfinden, welche Parameter in welchem Maße einzuhalten sind. Ein solcher Parameter ist der sich minimal bildende Unterdruck unterhalb des Atmosphärendrucks beim Ansaugvorgang (siehe die Erläuterung der DE 39 03 142 A1). Die Viskosität der Probenflüssigkeit, die Stärke der auf den Kolben der Kolbenpumpe wirkenden Rückstellfeder und der Strömungsquerschnitt der Pipettenspitze beeinflussen den sich einstellenden Unterdruck. Mindestens mit diesem Druck sollte die Pipette geprüft werden, um die an einem Leck einströmende Gasmenge korrekt und in für die Praxis geeigneter Weise zu erfassen. Eine weitere Größe ist der Druckanstieg über eine bestimmte Zeitspanne. Diese ist abhängig von der Größe des Totvolumens in der Einheit aus Pipette und Pipettenspitze während der Dichtigkeitsprüfung. Selbst das eingangs erläuterte Verfahren zur Dichtigkeitsprüfung bei einer automatischen Pipettiervorrichtung berücksichtigt diese Größe nicht. Folglich muss selbst dort sicherheitshalber ein unterster Grenzwert vorgegeben werden. Das Ergebnis ist, dass auch Pipetten bereits gewartet werden, die tatsächlich noch nicht gebrauchsuntüchtig sind.

Der Lehre liegt nun das Problem zugrunde, ein Verfahren zur Dichtigkeitsprüfung von handgehaltenen Kolbenhubpipetten anzugeben, das eine verlässliche und von der Qualifikation des Bedieners unabhängigere Dichtigkeitsprüfung derartiger Kolbenhubpipetten erlaubt. Die Problemstellung ist auch auf die Angabe einer entsprechenden Dichtigkeits-Prüfeinrichtung für dort anzukoppelnde handgehaltene Kolbenhubpipetten gerichtet sowie auf ein diesbezügliches System.

In verfahrensmäßiger Hinsicht wird das zuvor erläuterte Problem mittels des Verfahrens gemäß Anspruch 1 gelöst. Vorteilhafte Ausgestaltungen und Weiterbildungen sind Gegenstand der Ansprüche 2 bis 9.

In vorrichtungsmäßiger Hinsicht wird das zuvor erläuterte Problem durch eine Dichtigkeits-Prüfeinrichtung mit den Merkmalen von Anspruch 10 gelöst. Insoweit sind bevorzugte Ausgestaltungen und Weiterbildungen Gegenstand der Ansprüche 11 bis 14.

Schließlich wird das zuvor erläuterte Problem durch ein System gemäß Anspruch 15 gelöst.

Aufgrund seiner Ausgestaltung kann das erfindungsgemäße Verfahren außerhalb der handgehaltenen Kolbenhubpipette auf Basis einer separaten Dichtigkeits-Prüfeinrichtung ablaufen, an die die Kolbenhubpipette mit aufgesteckter Pipettenspitze angeschlossen wird. Die Pipette und ein Anschlussvolumen in der Prüfvorrichtung werden auf einen Messdruck unterhalb des Atmosphärendrucks evakuiert. Bei angehaltener oder abgekoppelter Vakuumpumpe wird nach einer bestimmten Zeitspanne mittels eines Drucksensors ein eventueller Druckanstieg im Anschlussvolumen gemessen. Das Verfahren kann auf zwei unterschiedliche Arten durchgeführt werden.

Im einen Fall wird nach Ermittlung des Druckanstiegs mittels der Anzeigeeinrichtung die Pipette unmittelbar als hinreichend dicht/gebrauchsfertig oder nicht hinreichend dicht/nicht gebrauchsfertig bewertet. Dieses Verfahren erfordert beim Bediener eine Kenntnis des zulässigen Druckanstiegs der geprüften Kolbenhubpipette mit der aufgesteckten Pipettenspitze und/oder eine digitale Anzeige.

Die andere Variante des Verfahrens automatisiert auch den Abgleichvorgang dahingehend, dass der im Verfahrensschritt d) ermittelte Druckanstieg mittels einer elektronischen Steuereinrichtung mit einem in deren Datenspeicher gespeicherten Referenzwert oder bei einem kontinuierlichen Verlauf mit gespeicherten Referenzwerten verglichen wird. Diese Werte gelten dann für die jeweils zu prüfende Pipette, für eine Pipettengruppe und/oder für bestimmte Pipettenspitzen bestimmter Volumina oder einer bestimmten Volumengruppe. Abhängig vom Ergebnis dieses Vergleichs wird die Pipette dann, ggf. auch automatisch, als hinreichend dicht/gebrauchsfähig oder nicht hinreichend dicht/nicht gebrauchsfähig bewertet.

Mit dem erfindungsgemäßen Verfahren ist eine sichere und schnelle Überprüfung der Funktionsfähigkeit von Pipetten gegeben. Bereits eine sich anbahnende Undichtigkeit einer Pipette kann registriert werden. Der Bediener kann rechtzeitig für Ersatz und/oder Reparatur sorgen. Über Prüfintervalle lässt sich auch statistisch eine Ausfallwahrscheinlichkeit für Pipetten eines bestimmten Pipettentyps ermitteln. Im einfachsten Fall erfolgt die Steuerung manuell und der Drucksensor ist direkt mit der Anzeigeeinrichtung gekoppelt, die die Funktionszustände der geprüften Kolbenhubpipette digital anzeigt. Eher wird man allerdings mit einer elektronischen Steuereinrichtung arbeiten, die die Auswertung übernimmt.

Hinsichtlich des im Anschlussvolumen der Dichtigkeits-Prüfeinrichtung zu messenden Druckanstiegs empfiehlt es sich, dass im Verfahrensschritt e) oder g) ein Druckanstieg von ca. 0,1 hPa bis ca. 50 hPa als zulässig bewertet wird. Der Druckanstieg ist abhängig von der Fehlergrenze der Pipetten und von deren Totvolumen und dem Anschlussvolumen. Dahingehend besteht kein proportionaler Zusammenhang mit dem Nennvolumen der Pipetten. Der zulässige Druckanstieg kann aus diesen Parameter berechnet werden und deren Grenzwert kann daraus festgelegt werde.

Besonders zweckmäßig ist eine Ausgestaltung, für die gilt, dass die Bewertung im Verfahrensschritt e) oder g) in diskreten Stufen erfolgt. Dies macht die Auswertung für den Bediener einfach. Er bekommt den Hinweis, dass die Pipette in Ordnung oder eben nicht in Ordnung ist.

Für die Auswertung empfiehlt es sich, dass die Bewertung im Verfahrensschritt e) oder g) mittels einer Anzeigeeinrichtung der Dichtigkeits-Prüfeinrichtung nur digital erfolgt. Insbesondere ist es auswertungstechnisch zweckmäßig, dass die Anzeige mittels der Anzeigeeinrichtung optisch, insbesondere mit verschiedenen Symbolen, Farben und/oder Leuchtmitteln, erfolgt. Im Zuge der mehrstufigen Anzeige kann man beispielsweise vorsehen, dass die Stufe "grün" Druckanstiege bis zu einem bestimmten Prozentsatz des Grenzwertes, der Bereich "gelb" folgende Druckanstiege bis zum Grenzwert, die die Fehlergrenze noch nicht überschreiten lassen und Druckanstiege darüber dem Bereich "rot" zugeordnet sind.

Alternativ oder zusätzlich kann man auch vorsehen, dass die Anzeige mittels der Anzeigeeinrichtung akustisch, insbesondere mit Tönen unterschiedlicher Frequenz erfolgt. Eine akustische Anzeige hat den Vorteil, dass sie ohne weiteres Zutun des Bedieners wahrgenommen wird.

Für die Durchführung des erfindungsgemäßen Verfahrens zur Dichtigkeitsprüfung sind verschiedene Parameter von Interesse. Für eine praxisgerechte Prüfung hat es sich gezeigt, dass es zweckmäßig ist, wenn im Verfahrensschritt c) mit einem Messdruck von etwa 20 hPa bis etwa 300 hPa unter Atmosphärendruck gearbeitet wird. Für eine statische und vor allem bei einer dynamische Prüfung, d. h. ein mehrmaliges Betätigen der Kolbenhubpipette bei angelegtem Messdruck, sollte der Messdruck so gewählt werden, dass die Federkraft gegen die manuelle Kolbenbewegung nicht überwunden wird d. h. die Kolbenbewegung beim Ansaugen noch möglich ist.

Hinsichtlich der Zeitspanne für die Ermittlung des Druckanstiegs im Verfahrensschritt d) empfiehlt es sich, dass mit einer Zeitspanne von ca. 3 s bis ca. 60 s, insbesondere von ca. 5 s bis 20 s, gearbeitet wird.

Es ist nicht zu vermeiden, dass die Dichtigkeits-Prüfeinrichtung ein zusätzliches Gasvolumen hat, das Anschlussvolumen, das bei der Messung des Druckanstiegs Berücksichtigung finden muss, um die Messergebnisse richtig auszuwerten.

Den gesamten Bereich würde man wohl mit einem insoweit unveränderten Anschlussvolumen mittlerer Größe nicht abdecken können, weil unter Umständen die Messgenauigkeit des Drucksensors dann nicht ausreichen würde. Für einen breiteren Bereich könnte man auch an unterschiedliche Anschlussvolumina, die vielleicht über unterschiedliche Messkanäle bereitgestellt werden können, denken.

Es hat sich gezeigt, dass dieses Anschlussvolumen bei typischen Kolbenhub-Luftpolsterpipetten zweckmäßigerweise in einem bestimmten Größenbereich liegen sollte, um die Pipetten dynamisch prüfen zu können. Dabei wird der Kolben der Pipette verfahren und eine Luftmenge, die je nach Größe der Kolbenhubpipette erheblich sein kann, dem Anschlussvolumen der Dichtigkeits-Prüfeinrichtung zugeführt und wieder entnommen. Das Anschlussvolumen der Dichtigkeits-Prüfeinrichtung muss so bemessen sein, dass es beim Zuführen nicht zu einem Anstieg des Druckes über den Atmosphärendruck kommt. Ebenso gehen das einströmende Gasvolumen durch ein Leck bestimmter Größe, die zu erwartende Prüfzeit und die Anzahl der Betätigungen mit ein. Es ist auch zu beachten, dass durch das Zuführen oder Entnehmen von Luft während der dynamischen Prüfung eine zum Teil erhebliche Änderung des Messdruckes zustande kommt, die das Kriterium für den Druckanstieg im Anschlussvolumen beeinflusst. Es hat sich gezeigt, dass für Pipetten und Pipettenspitzen zwischen 10 μl und 10 ml zweckmäßigerweise mit einer Dichtigkeits-Prüfeinrichtung gearbeitet wird, deren Anschlussvolumen zwischen etwa 1,0 ml und etwa 200 ml beträgt. Das Anschlussvolumen wird dazu durch ein Zusatzvolumen vergrößert. Das Zusatzvolumen wird, insbesondere beim Evakuieren in Verfahrensschritt c), über ein Ventil zugeschaltet. Es ist auch möglich mehrere und/oder unterschiedlich große Zusatzvolumina zuzuschalten, um das Anschlussvolumen auf das Totvolumen des zu prüfenden Systems Pipette/Pipettenspitze abzustimmen. Luftpolster-Kolbenhubpipetten sind bis hinunter zu 1 μl im Einsatz, die obere Volumengrenze liegt für übliche Kolbenhubpipetten derzeit wohl bei 10 ml. Insgesamt ist es so, dass sich das hier bezifferte Anschlussvolumen zum Totvolumen der Pipette mit Pipettenspitze addiert.

Das Gesamtvolumen wird beim Prüfen evakuiert und zumindest das Anschluss- und das Totvolumen der Pipette/Pipettenspitze wieder auf Atmosphärendruck belüftet. Vorteilhaft ist, wenn das Zusatzvolumen der Dichtigkeits-Prüfeinrichtung nach erstmaligem Evakuieren in Verfahrensschritt c) nicht mehr belüftet wird, um diese Zeit zu sparen. Um den Messdruck in den Leitungen und Komponenten zu stabilisieren, bedarf es überraschenderweise einer nicht unerheblichen weiteren Zeitspanne. Durch schnelles Evakuieren und Belüften entsteht eine adiabatische Temperaturdifferenz zwischen dem Gasvolumen und Leitungssystem, die zu einer Drift im Messdruck führt und nur vor dem Verfahrensschritt d) im Prüfvorgang durch die weitere Zeitspanne ausgeglichen werden kann. Beim Zuschalten der bereits evakuierten Zusatzvolumina verringert sich dieser Zeitbedarf gegen Null.

Überraschenderweise konnte dieser Zeitbedarf zumindest beim erstmaligen Evakuieren auch durch eine die Temperatur des Gasvolumens stabilisierende Masse, im Anschluss- und/oder Zusatzvolumen angeordnet, reduziert werden. Die Prüfzeit verringert sich erheblich, wenn die Masse ein Oberflächen/Volumen-Verhältnis größer als 3 hat, und um Größenordnungen, wenn das Verhältnis größer als 20 ist. Die Masse kann nicht nur als zusätzliches Bauelement ausgeführt sein, sondern auch durch eine besondere, gleichartige Formgebung der Innenwände erzielt werden.

Um für unterschiedliche Pipettenspitzen Vorsorge treffen zu können, kann es sich empfehlen, dass im Verfahrensschritt b) ein auf die jeweils verwendete Pipettenspitze abgestimmter Adapter verwendet wird. Insbesondere empfiehlt es sich, dass Adapter für verschiedene Pipettenspitzen dasselbe Anschlussvolumen aufweisen. Dies gilt in entsprechender Weise auch für mehrkanalige Kolbenhubpipetten. Deren Adapter mit der entsprechenden oder einem Bruchteil der Anzahl von Aufnahmen für die Pipettenspitzen werden verwendet. Bei mehrkanaligen Kolbenhubpipetten, deren Kanäle einer Einzelprüfung unterzogen werden sollen, können einzeln und jeder Kanal für sich geprüft werden. Um diesen Vorgang zu verkürzen ist eine Dichtigkeits-Prüfeinrichtung mit einem Adapter von Vorteil, der einzeln über Ventile zuschaltbare Anschlussvolumina mit oder ohne entsprechend angeschlossene Drucksensoren hat und verwendet wird. Die Verwendung unterschiedlicher Adapter für unterschiedliche Pipettenspitzen ist obligatorisch. Die Adapter zu kodieren und durch die Dichtigkeits-Prüfvorrichtung automatisch zu erfassen, hat sich als vorteilhaft in der Fehlervermeidung erwiesen.

Bereits zuvor ist darauf hingewiesen worden, dass die Totvolumina verschiedener Pipetten und Pipettenspitzen bei unterschiedlichen zu pipettierenden Volumina, Formen und Konstruktionen der Pipettenspitzen und Pipetten schwanken können. Das hat erheblichen Einfluss auf die Messergebnisse der Dichtigkeitsprüfung. Deshalb empfiehlt es sich, vor der eigentlichen Dichtigkeitsprüfung im erfindungsgemäßen Verfahren zur Dichtigkeitsprüfung eine Typbestimmung der Pipette und/oder Pipettenspitze vor dem Verfahrensschritt a) vorzunehmen. An der Dichtigkeits-Prüfvorrichtung kann dazu eine Einstellung auf diese Komponenten vorgenommen werden. Diese Eingabe kann manuell erfolgen, jedoch von Vorteil ist, wenn mit einem Lesegerät an der Dichtigkeits-Prüfeinrichtung eine Kodierung an der Pipette und/oder Pipettenspitzen erfasst wird. Die Steuereinrichtung kann dann die Kodierung mit denen im Datenspeicher gespeicherten Kodierungen vergleichen und die entsprechende Einstellung ermitteln. Bevorzugt sind die Werte verschiedener bekannter Pipetten und/oder Pipettenspitzen in dem Datenspeicher der Dichtigkeits-Prüfvorrichtung abgelegt und können vom Bediener ausgewählt werden.

Besondere Bedeutung kommt der Lehre des Anspruchs 8 zu, die Verfahrensschritte beschreibt, die im erfindungsgemäßen Verfahren vor dem Verfahrensschritt a) ablaufen. Auf diese Weise kann man Referenzwerte für die spezielle, nunmehr ausgemessene Pipettenspitze auswählen, die dann im Verfahrensschritt f) genutzt werden können. Dabei wird vereinfachend unterstellt, dass unterschiedliche Pipettenspitzen einen individuellen Unterdruck im Ansaugvorgang durch die Vakuumpumpe der Prüfeinrichtung generieren, die Rückschlüsse auf dort die einzusetzenden Pipetten erlauben.

Im Datenspeicher der Dichtigkeits-Prüfeinrichtung können die Druckanstiegsprofile und der Gleichgewichtsdruck für verschiedene Pipettenspitzen und Pipetten als Referenzwert hinterlegt sein, die dann in einem Auswahlverfahren vor dem Verfahrensschritt c) erkannt und automatisch ausgewählt werden können. Im Ergebnis ist die Bestimmung von gebrauchsfähig/nicht-gebrauchsfähig mit einer höheren Genauigkeit möglich.

In vorteilhafter Weise können Verfahrensschritte vor dem Verfahrensschritt c) wiederholt ablaufen, wobei an der Dichtigkeits-Prüfeinrichtung parallel zu der Pipette Zusatzvolumina bekannter Größe angeschlossen werden. Mit dem Vergleich der Zeitdauer für das Evakuieren des so erzeugten unterschiedlichen Anschlussvolumens kann das Totvolumen ermittelt und die Pipette ausgewählt werden.

Für eine genaue Dichtigkeitsprüfung wird der Messdruck vor dem Verfahrensschritt c) in Abhängigkeit des Nenn-, Anschluss- und Zusatzvolumens sowie des Spitzentyps bestimmt.

Grundsätzlich ist es möglich, mittels des erfindungsgemäßen Verfahrens eine breite Palette von Pipetten und Pipettenspitzen unterschiedlicher Volumina zu prüfen. Es kann sich allerdings empfehlen, eine Gruppenbildung vorzunehmen, wozu voranstehend einiges ausgeführt worden ist.

Wie bereits zuvor erläutert worden ist, ist Gegenstand der Erfindung auch eine entsprechende Dichtigkeits-Prüfeinrichtung zur Dichtigkeitsprüfung von handgehaltenen, einkanaligen oder mehrkanaligen Kolbenhubpipetten, vorzugsweise solchen mit Luftpolster. Diese Dichtigkeits-Prüfeinrichtung ist durch die Merkmale von Anspruch 10 gekennzeichnet.

Für die Vorrichtung gelten ähnliche Überlegungen wie zuvor für das erfindungsgemäße Verfahren dargestellt. Dementsprechend darf auf die voranstehenden Ausführungen verwiesen werden. Im Übrigen wird die Vorrichtung nachfolgend anhand der Erläuterungen eines bevorzugten Ausführungsbeispiels der Erfindung mit Bezugnahme auf die Zeichnung detailliert erläutert. Dabei werden alle Vorrichtungsansprüche im Einzelnen behandelt.

Schließlich ist Gegenstand der Erfindung auch ein System aus Dichtigkeits-Prüfeinrichtung und Adaptern. Auch dieses System wird im Zuge der Erläuterung des Ausführungsbeispiels anhand der Zeichnung näher behandelt.

Die einzige Figur der Zeichnung zeigt ein Ausführungsbeispiel einer Prüfeinrichtung 1 zur Dichtigkeitsprüfung von handgehaltenen, einkanaligen oder mehrkanaligen Kolbenhubpipetten 2, vorzugsweise solchen mit Luftpolster (wie auch hier dargestellt). Mittels dieser Dichtigkeits-Prüfeinrichtung 1 kann eine handgehaltene Kolbenhubpipette 2 extern auf Dichtigkeit geprüft werden, wobei auf die Pipette 2 eine zu dieser Pipette 2 passende Pipettenspitze 3 aufgesteckt ist. Die Messung erfolgt bei aufgesteckter Pipettenspitze 3 und von außen an der Pipettenspitze 3 angreifend.

Die Dichtigkeits-Prüfeinrichtung 1 weist im dargestellten Ausführungsbeispiel zunächst ein das System umschließendes Gehäuse 4 auf. Im Gehäuse 4 befindet sich eine Vakuumpumpe 5, die von einem elektrischen Antriebsmotor 6, ggf. über ein Untersetzungsgetriebe, oder auch manuell angetrieben wird. Bei der Vakuumpumpe 5 handelt es sich im dargestellten Ausführungsbeispiel um eine Membranpumpe, grundsätzlich sind aber auch andere Pumpen, beispielsweise eine Kolbenpumpe oder eine Schlauchpumpe einsetzbar. Im dargestellten Ausführungsbeispiel und nach bevorzugter Ausführung ist der Membranpumpe 5 ansaugseitig zusätzlich ein Ventil 7 vorgeschaltet.

Teil der Dichtigkeits-Prüfeinrichtung 1 ist auch eine Aufnahme 8 zum abgedichteten Anschließen der Pipettenspitze 3. Es können auch mehrere Aufnahmen zum gleichzeitigen Anschließen mehrerer Pipettenspitzen einer mehrkanaligen Kolbenhubpipette vorgesehen sein. Zwischen der Aufnahme 8 und der Vakuumpumpe 5 bzw. dem Ventil 7 erstreckt sich ein Leitungssystem 9.

Vorgesehen ist hier und bevorzugt eine elektronische Steuereinrichtung 10, ein der elektronischen Steuereinrichtung 10 zugeordneter, nicht flüchtiger Datenspeicher 11 und ein messtechnisch an das Leitungssystem 9 und - hier - auswertungstechnisch an die Steuereinrichtung 10 angeschlossener Drucksensor 12. Der Abschnitt zwischen Aufnahme 8 und Ventil 7 bzw. Vakuumpumpe 5 mit den an Verzweigungen abgehenden Anschlüssen bildet ein bestimmtes Anschlussvolumen der Dichtigkeits-Prüfeinrichtung 1.

Wesentlich ist für die erfindungsgemäße Dichtigkeits-Prüfeinrichtung 1, dass sich der Drucksensor 12 an das Anschlussvolumen im Leitungssystem 9 anschließt, dessen Druckverhältnisse ausgemessen werden, um dadurch auf die Druckverhältnisse in der Pipettenspitze 3 an der Pipette 2 rückschließen zu können.

Bei allen Prüfmethoden, die mit schneller Änderung des Druckes in einem Messvolumen einhergehen, ist die adiabatische Erwärmung oder Abkühlung der bewegten Luftmasse in mehr oder weniger großem Ausmaß zu berücksichtigen. Dies kann man durch die Einführung einer Relaxationsphase zu Beginn des Messvorganges tun. Ebenso ist eine Korrektur des Messsignals möglich, die die thermisch bedingten Effekte kompensiert.

Jedoch sind Maßnahmen im Anschlussvolumen messtechnisch sinnvoller, die eine schnellere Anpassung der Temperatur bewirken, wie beispielsweise Füllmassen mit einem Oberfläche/Volumen-Verhältnis von mehr als 3, besser mehr als 20. Als besonders effektiv und gebrauchsfähig hat sich Edelstahlwolle bewährt, die die Lufttemperatur quasi unmittelbar korrigiert. Deren Verhältnis errechnet sich aus dem kreisförmigen Querschnitt folgendermaßen:

$$d \cdot \pi \cdot l \ / \ d^2 \cdot \pi/4 \cdot l \quad \text{also} \quad 4d \ / \ d^2$$

Die erfindungsgemäße Dichtigkeits-Prüfeinrichtung 1 arbeitet so, dass bei gemäß der einzigen Figur angeschlossener Kolbenhubpipette 2 die Pipette 2 mit der Pipettenspitze 3 auf einen Messdruck unterhalb des Atmosphärendrucks evakuiert wird. Dann wird die Vakuumpumpe 5 abgeschaltet und, hier, mittels des Ventils 7 vom Leitungssystem 9 abgekuppelt. Das Anschlussvolumen im Leitungssystem 9 ist dadurch innerhalb der Dichtigkeits-Prüfeinrichtung 1 abgedichtet. Mittels des Drucksensors 12 wird nun der Druck im Anschlussvolumen während einer bestimmten Zeitspanne und/oder nach einer bestimmten Zeitspanne gemessen.

In der nicht dargestellten, einfachsten Ausführung einer Dichtigkeits-Prüfeinrichtung 1 erfolgt deren Steuerung manuell und der Drucksensor 12 ist mit einer Anzeigeeinrichtung 13 direkt gekoppelt. Die Anzeigeeinrichtung 13 kann dabei so eingestellt sein, dass die Signale des Drucksensors 12 Anzeigeänderungen auslösen, die den Gebrauchszustand der geprüften Kolbenhubpipette 2 unmittelbar, beispielsweise mit farbigen Signallämpchen, anzeigen.

Bei der im Ausführungsbeispiel dargestellten Dichtigkeits-Prüfeinrichtung 1 mit der elektronischen Steuereinrichtung 10 wird das Prüfverfahren mit gespeicherten Werte gesteuert und werden Algorithmen mit den gespeicherten und veränderlichen Werten abgearbeitet, statt eine manuelle Einstellung auf die Pipette 2 vorzunehmen. Die Steuereinrichtung 10 ermittelt hierbei aus gemessenen Druckanstiegen das Ergebnis, ob also die ausgemessene Kolbenhubpipette 2 mit Pipettenspitze 3 hinreichend dicht ist oder nicht. Die elektronische Steuereinrichtung 10 steuert die Anzeigeeinrichtung 13 dahingehend an, so dass auch insoweit der Gebrauchszustand bevorzugt in mehreren Stufen angezeigt wird. Eine solche Anzeige kann mit farbigen optischen Elementen arbeiten, aber auch mit Symbolen oder einer Klartext-Angabe.

Eine zweckmäßige automatisierte Verfahrensweise kann auch so ablaufen, dass der ermittelte Druckanstieg mittels der Steuereinrichtung 10 mit einem in dem Datenspeicher 11 gespeicherten Referenzwert oder gespeicherten Referenzwerten verglichen wird. Abhängig vom Ergebnis dieses Vergleichs wird dann, ausgelöst von der Steuereinrichtung 10, die Pipette 2 als hinreichend dicht/gebrauchsfähig oder nicht hinreichend dicht/nicht gebrauchsfähig bewertet.

Das dargestellte Ausführungsbeispiel der Dichtigkeits-Prüfeinrichtung 1 sieht vor, dass eine Bewertung der Pipette 2 in diskreten Stufen erfolgt. Genauer gesagt, sieht dieses Ausführungsbeispiel vor, dass bei der Bewertung in diskreten Stufen eine mittlere Stufe für eine Bewertung der Pipette 2 als geringfügig undicht/noch gebrauchsfähig vorgesehen ist. Dies trägt der Tatsache Rechnung, dass es nämlich bei einem kleinen Leck möglich ist, ohne Auswirkung des Lecks die Pipettiergenauigkeit im Rahmen der Fehlergrenzen einzuhalten.

Zweckmäßigerweise handelt es sich bei der Anzeigeeinrichtung 13 um eine optische Anzeige mit verschiedenen Symbolen, Farben und/oder Leuchtmitteln. Der Bediener bekommt mit dieser Anzeige 13 einfach mitgeteilt, ob sich die ausgemessene Pipette 2 mit Pipettenspitze 3 im Bereich beispielsweise "grün", "gelb", oder "rot" befindet und somit gebrauchsfähig, bedingt gebrauchsfähig oder nicht mehr gebrauchsfähig ist. Eine LCD-Anzeige ist dabei besonders günstig hinsichtlich des Energieverbrauchs.

Grundsätzlich ist auch eine akustische Anzeige realisierbar. Zweckmäßig ist auch eine kombinierte Anzeige optisch/akustisch.

Die Dichtigkeits-Prüfeinrichtung 1 hat überdies am Gehäuse 4 noch einen Ein-/Ausschalter 14, ebenso verbunden mit der Steuereinrichtung 10, sowie einen Starttaster 15 zum Starten entsprechender Verfahrensabschnitte des mit dieser Vorrichtung realisierten erfindungsgemäßen Verfahrens zur Dichtigkeitsprüfung.

Dem Ventil 7 ansaugseitig vorgeschaltet ist im Übrigen ein Filter 16, eingesetzt in das Leitungssystem 9, hier außerhalb des Gehäuses 4 der Dichtigkeits-Prüfeinrichtung 1. Der Filter 16 soll das Eintreten von Verunreinigungen in die Dichtigkeits-Prüfeinrichtung 1 verhindern. Seine Anordnung außerhalb des Gehäuses 4 ist zweckmäßig, um den Filter 16 leicht auswechseln zu können. Ein weiterer Filter 16' ist vor dem Ventil 7' zur Belüftung des Anschlussvolumens angeordnet.

Das dargestellte und bevorzugte Ausführungsbeispiel einer Dichtigkeits-Prüfeinrichtung 1 zeichnet sich ferner dadurch aus, dass der Messdruck etwa 20 bis etwa 300 hPa, vorzugsweise etwa 50 bis 150 hPa unter Atmosphärendruck liegt. Entsprechend gilt, dass die Zeitspanne, nach der ein Druckanstieg ermittelt wird, zwischen ca. 3 s und ca. 60 s, vorzugsweise zwischen ca. 5 s und ca. 20 s, liegt. Schließlich empfiehlt es sich, dass als zulässiger Druckanstieg ein Druckanstieg von ca. 0,1 hPa bis ca. 50 hPa vorgesehen ist.

Der Drucksensor 12 kann im zuvor ausführlich erläuterten, bevorzugten und nicht einschränkend zu verstehenden Ausführungsbeispiel eine Auflösung von etwa 0,01 hPa bis etwa 0,1 hPa haben. Das ist ein kostenmäßig günstiger, präzise arbeitender Drucksensor 12, der auf die hier vorliegenden Druckbereiche und Druckanstiege zweckmäßig abgestimmt ist.

Bereits oben ist erläutert worden, dass es auf die Größe des Anschlussvolumens der Dichtigkeits-Prüfeinrichtung 1 für die Präzision der Ermittlung des zulässigen Druckanstiegs ankommt. Das dargestellte und bevorzugte Ausführungsbeispiel zeichnet sich nun dadurch aus, dass die Dichtigkeits-Prüfeinrichtung 1 für zurzeit gebräuchliche Pipetten und Pipettenspitzen zwischen 10 μl und 10 ml ein Anschlussvolumen zwischen etwa 1,0 ml und etwa 200 ml aufweist. Für einen breiteren Einsatzbereich von Pipettenspitzen 3 und Kolbenhubpipetten 2 wird man möglicherweise mehrere umschaltbare Messbereiche vorsehen müssen.

Dem Anschlussvolumen ist im Weiteren mindestens ein Behälter 17 über ein Ventil 18 zuschaltbar. Der Behälter umschließt ein bestimmtes Zusatzvolumen, sodass das Anschlussvolumen insgesamt von etwa 1 ml auf etwa 200 ml vergrößert werden kann. Hierzu können weitere unterschiedlich voluminöse Behälter 17', 17" über ihre jeweiligen Ventile 18', 18" zugeschaltet werden. Es ist auch möglich mehrere und/oder unterschiedlich große Zusatzvolumina zuzuschalten, um das Anschlussvolumen auf das Totvolumen des zu prüfende Systems Pipette/Pipettenspitze abzustimmen.

Ein einmal evakuiertes Zusatzvolumen bzw. Behälter 17, 17', 17" der Dichtigkeits-Prüfeinrichtung wird bzw. werden im Betrieb nicht mehr belüftet. Dies verkürzt nicht nur die Zeit zum erneuten Evakuieren, sondern dient auch dazu um den bei diesen Druckänderungen adiabatischen Effekt auszugleichen.

Statt das Anschlussvolumen mit unterschiedlich voluminösen Behältern zu verändern, ist es auch möglich eine Verdrängereinrichtung abzuschließen. Diese könnte permanent mit dem Leitungssystem 9 verbunden sein. Die Verdrängereinrichtung, beispielsweise einer Kolben-/Zylinder-Einheit, die mittels eines Aktuators oder manuell am Stellantrieb für den Kolben betätigt wird, kann ihr Volumen verändern.

Das dargestellte und bevorzugte Ausführungsbeispiel zeigt hinsichtlich der Dichtigkeits-Prüfeinrichtung 1 noch eine Besonderheit dergestalt, dass die Aufnahme 8 in einem auswechselbaren Adapter 19 ausgebildet ist. Der Adapter 19 kann mittels einer Adapterkupplung 20 am Gehäuse 4 der Dichtigkeits-Prüfeinrichtung 1 verwechslungsfrei angekuppelt werden. Somit können verschiedene Adapter 19 für verschiedene Pipetten 2 mit Pipettenspitzen 3 verwendet werden. Interessant dabei ist, dass nach bevorzugter Lehre vorzusehen ist, dass Adapter 19 mit unterschiedlichen Aufnahmen 8 für unterschiedliche Pipettenspitzen 3 im Wesentlichen dasselbe Anschlussvolumen aufweisen.

Selbstverständlich wird man nicht vermeiden können, dass bei einem Adapter 19 für eine Mehrkanal-Kolbenhubpipette, insbesondere Luftpolster-Kolbenhubpipette 2, das Anschlussvolumen des Leitungssystems 9 größer ist als bei einer einkanaligen Ausführung. Das muss man bei der Ausführung entsprechend berücksichtigen. Möglicherweise kann man auch eine mehrkanalige Auswertung vornehmen, so dass je Aufnahme 8 im mehrkanaligen Adapter 19 ein eigenes Leitungssystem 9 mit einem eigenen Drucksensor 12 vorgesehen ist.

Das dargestellte und bevorzugte Ausführungsbeispiel zeigt im Übrigen, dass unterschiedliche Adapter 19 unterschiedlich kodiert sind. Der Adapter 19 weist dazu eine Kodierung 21 auf, die mechanisch, optisch und/oder anderweit berührungslos ablesbar, beispielsweise magnetisch ist. Ein entsprechender Sensor 22 für die Kodierung 21 des Adapters 19 befindet sich am Gehäuse 4 der Dichtigkeits-Prüfeinrichtung 1 und ist zu Auswertungszwecken mit der Steuereinrichtung 10 verbunden.

Nach dem bevorzugten Verfahren wird vor dem eigentlichen Vorgang der Dichtigkeitsprüfung der Kolbenhubpipette 2, also vor dem Verfahrensschritt c), eine Einstellung auf die Pipette und/oder Pipettenspitzen vorgenommen, wobei die Werte aus dem Datenspeicher automatisch ausgewählt werden. Der Pipettentyp, also welche Volumengröße, Ein- oder Mehrkanal usw. kann bereits in dem Datenspeicher vorliegen, so dass nur eine Auswahl getroffen werden braucht.

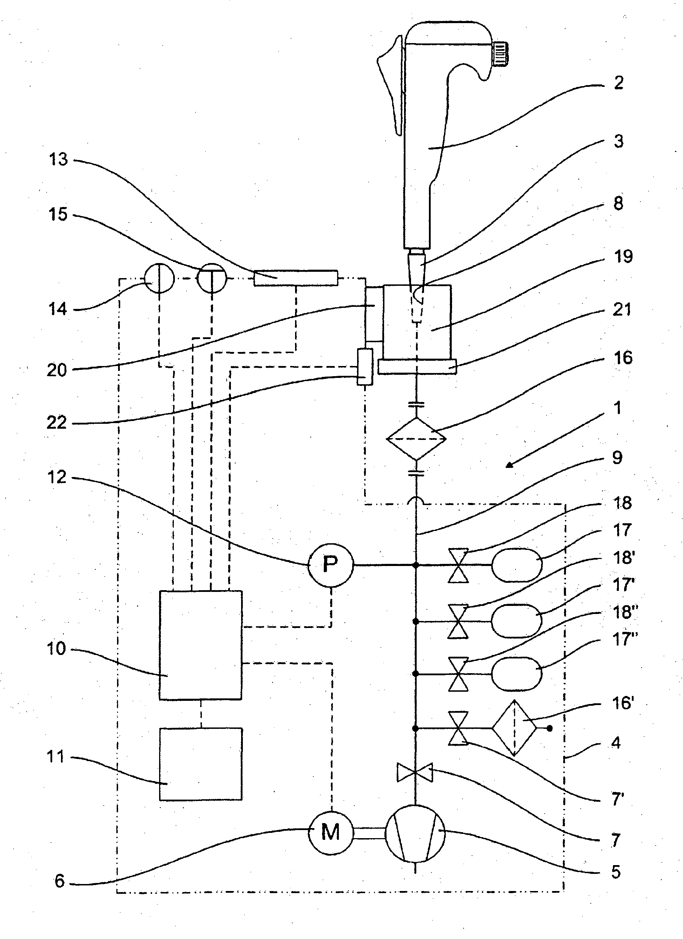

Die Einstellung auf die Pipette und/oder Pipettenspitzen kann auch mittels Datenübertragung erfolgen. Dazu hat die Prüfeinrichtung ein Lesegerät (was allerdings Fig. 1 nicht zeigt), um eine an der Pipette 2 oder auf der Pipettenspitze 3 angeordnete Kodierung abzugreifen, und zwar direkt oder berührungslos. Beispielsweise kann die Pipettenspitze einen Barcode und die Pipette einen RFID-Chip, Transponder oder eine allgemeine Funkschnittstelle, wie sie in DE-A 199 11 397 zur uni- oder bidirektionalen Datenübertragung vorgesehen ist, tragen. Mit der Steuereinrichtung wird die Kodierung mit im Datenspeicher gespeicherten Kodierungen verglichen, die entsprechende Einstellung ermittelt und zur weiteren Verwendung übernommen. Die Kodierung oder die übermittelten Datenpakete können im Weiteren beispielsweise und je nach Kapazität den Typ, Größe, Beschaffenheit, Seriennummer, Chronologie der Prüfungen und Kalibrierung der Prüflinge beinhalten.

Mit der erfindungsgemäßen Dichtigkeits-Prüfeinrichtung 1 lässt sich im übrigen zur Erhöhung der Messgenauigkeit so arbeiten, dass die Dichtigkeits-Prüfeinrichtung 1 in der Weise betreibbar ist, dass eine interessierende, zu der zu prüfenden Kolbenhubpipette passende Pipettenspitze 3 als solche an die Aufnahme 8 anschließbar ist, dass das Anschlussvolumen der Prüfeinrichtung 1 bei angeschlossener Pipettenspitze 3 ohne Kolbenhubpipette 2 bei laufender Vakuumpumpe 5 auf einen sich einstellenden Gleichgewichtsdruck unterhalb des Atmosphärendrucks evakuierbar ist, und dass aus dem sich einstellenden Gleichgewichtsdruck mittels der elektronischen Steuereinrichtung 10 der Spitzentyp der Pipettenspitze 3 und darüber ein bestimmter zulässiger Druckanstieg für die passende Kolbenhubpipette 2 ermittelbar und als Referenzwert in der Steuereinrichtung 10 speicherbar oder zur Auswahl eines entsprechend gespeicherten Referenzwertes nutzbar ist. Im Einzelnen ist dazu im allgemeinen Teil der Beschreibung hinsichtlich des entsprechenden Verfahrensanspruchs schon eine ausführliche Erläuterung erfolgt. Wesentlich ist, dass damit ein Indikator für die Art der Pipettenspitze 3 und damit ein Rückschluss auf die angeschlossene Kolbenhubpipette 2 möglich ist.

Das bevorzugte Verfahren mit vorheriger Kalibrierung der Dichtigkeits-Prüfeinrichtung 1 auf eine bestimmte Pipettenspitze 3 berücksichtigt, dass Pipettenspitzen 3 unterschiedliche Spitzenöffnungen haben. Durch deren mehr oder weniger großen Strömungswiderstand der beim Pipettieren einströmenden Flüssigkeit stellt sich in der Spitze, also im Totvolumen, ein unterschiedlicher Unterdruck ein. Die Pipettenspitze 3 wird dazu alleine in den Adapter 19 gesteckt. Mit dem Starttaster 15 wird dieser Prüfvorgang gestartet. Es kann auch nur ein einfaches Anschalten mit dem Schalter 14 erfolgen. Aus dem Signal des Drucksensors 12 kann die Steuereinrichtung 10 schließen, dass nur die Pipettenspitze 3 geprüft wird. Die konstant laufende Vakuumpumpe 5 leistet bei offener Pipettenspitze 3 einen bestimmten Unterdruck im Anschlussvolumen, also in dem Leitungssystem 9, der vom Drucksensor 12 gemessen wird. Dieser Unterdruck sollte der minimale Messdruck sein. Aus diesem Messdruck bestimmt die Steuereinrichtung 10 die Sollwerte für den zulässigen Druckanstieg oder wählt diese aus elektronisch hinterlegten Daten passend aus.

Im Weiteren kann mit der Dichtigkeits-Prüfeinrichtung 1 das Totvolumen der Kolbenhubpipette 2 ermittelt werden. Hierzu wird die Pipette 2 auf einen bestimmten Unterdruck evakuiert. Nach dem Belüften des Anschluss- und Totvolumens über das Ventil 7' wird das Anschlussvolumen um ein Zusatzvolumen vergrößert. Ein Ventil 18 zu einem Behälter 17 wird geöffnet und das System erneut auf den Unterdruck evakuiert. Durch Vergleich der Abpumpzeiten und den bekannten Anschluss- und Zusatzvolumen lässt sich das Totvolumen der Pipette 2 berechnen. Das Totvolumen beeinflusst den Messdruck, der beim dynamischen Prüfen der Pipette schwankt, und bestimmt das nötige Volumen des Leitungssystems, das ggf. durch die Zusatzvolumen erhöht werden muss.

Gegenstand der Erfindung ist schließlich auch ein System zur Dichtigkeitsprüfung von Kolbenhubpipetten mit einer Dichtigkeits-Prüfeinrichtung 1 und Adaptern für verschiedene Pipettenspitzen 3. Dessen Besonderheiten ergeben sich aus den voranstehenden Ausführungen in entsprechender Weise.

**Patentansprüche**

1. Verfahren zur Dichtigkeitsprüfung von handgehaltene, einkanaligen oder mehrkanaligen Kolbenhubpipetten, vorzugsweise von solchen mit Luftpolster, mit folgenden Verfahrensschritten:

a) Auf die Pipette wird eine zu dieser Pipette passende Pipettenspitze aufgesteckt.
b) Die Pipettenspitze wird an eine Dichtigkeits-Prüfeinrichtung angeschlossen, die eine Vakuumpumpe, einen Drucksensor und eine Anzeigeeinrichtung aufweist.
c) Mittels der Dichtigkeits-Prüfeinrichtung wird die Pipette mit der Pipettenspitze sowie ein Anschlussvolumen in der Dichtigkeits-Prüfeinrichtung mittels einer Vakuumpumpe auf einen Messdruck unterhalb des Atmosphärendrucks evakuiert.
d) Bei angehaltener oder abgekoppelter Vakuumpumpe und abgedichtetem Anschlussvolumen wird mittels des Drucksensors der Druck im Anschlussvolumen während einer bestimmten Zeitspanne und/oder nach einer bestimmten Zeitspanne gemessen und mittels einer elektronischen Steuereinrichtung ein eventueller Druckanstieg ermittelt.
e) Abhängig vom im Verfahrensschritt d) ermittelten Druckanstieg wird mittels der Anzeigeeinrichtung die Pipette als hinreichend dicht/gebrauchsfähig oder nicht hinreichend dicht/nicht gebrauchsfähig bewertet. Alternativ zum Verfahrensschritt e):
f) Der ermittelte Druckanstieg wird mittels der Steuereinrichtung mit einem in einem Datenspeicher gespeicherten Referenzwert oder dort gespeicherten Referenzwerten verglichen.
g) Abhängig vom Ergebnis des Vergleichs im Verfahrensschritt f) wird mittels der Anzeigeeinrichtung die Pipette als hinreichend dicht/gebrauchsfähig öder nicht hinreichend dicht/nicht gebrauchsfähig bewertet.

2. Verfahren nach Anspruch 1, **dadurch gekennzeichnet,**
**dass** im Verfahrensschritt e) oder g) ein Druckanstieg in Abhängigkeit von der Pipette von ca. 0,1 hPa bis ca. 50 hPa als zulässig bewertet wird, und/oder dass die Bewertung im Verfahrensschritt e) oder g) mittels der Anzeigeeinrichtung nur digital und/oder optisch, insbesondere mit verschiedenen Symbolen, Farben und/oder Leuchtmitteln, und/oder akustisch, insbesondere mit Tönen unterschiedlicher Frequenz erfolgt.

3. Verfahren nach Anspruch 1 oder 2, **dadurch gekennzeichnet,**
**dass** im Verfahrensschritt c) mit einem Messdruck von etwa 20 hPa bis etwa 300 hPa, vorzugsweise etwa 50 bis 150 hPa, unter Atmosphärendruck gearbeitet wird, und/oder
**dass** im Verfahrensschritt c) der Messdruck so gewählt ist, dass die Kolbenbewegung der Pipette in Ansaugrichtung möglich ist, und/oder dass im Verfahrensschritt d) mit einer Zeitspanne von ca. 3 s bis ca. 60 s, vorzugsweise von ca. 5 s bis 20 s, gearbeitet wird.

4. Verfahren nach einem der Ansprüche 1 bis 3, **dadurch gekennzeichnet, dass** für Pipetten und Pipettenspitzen mit einem Nennvolumen zwischen 10 $\mu$l und 10 ml mit einer Dichtigkeits-Prüfeinrichtung gearbeitet wird, deren Anschlussvolumen durch ein oder mehrere Zusatzvolumina zwischen etwa 1,0 ml und etwa 200 ml durch ein Ventil, insbesondere in Verfahrensschritt c), zuschaltbar vergrößert wird, wobei, vorzugsweise, das Anschlussvolumen der Dichtigkeits-Prüfeinrichtung auf das Totvolumen des zu prüfenden Systems Pipette/Pipettenspitze abgestimmt ist und durch ein oder mehrere Zusatzvolumina mit unterschiedlich großen Volumen das Anschlussvolumen verändert wird, wobei, weiter vorzugsweise, das Zusatzvolumen der Dichtigkeits-Prüfeinrichtung nach erstmaligem Evakuieren im Verfahrensschritt c) nicht mehr belüftet wird.

5. Verfahren nach einem der Ansprüche 1 bis 4, **dadurch gekennzeichnet, dass** im Verfahrensschritt b) ein auf die jeweils verwendete Pipettenspitze abgestimmter Adapter verwendet wird,
wobei, insbesondere, die Adapter für verschiedene Pipettenspitzen dasselbe Anschlussvolumen aufweisen.

6. Verfahren nach Anspruch 5, **dadurch gekennzeichnet,**
**dass** bei einer mehrkanaligen Kolbenhubpipette ein Adapter mit der entsprechenden oder einem Bruchteil der Anzahl von Aufnahmen für die Pipettenspitzen verwendet wird,
wobei, vorzugsweise, ein Adapter mit einzelnen je Pipettenspitze zuschaltbaren Anschlussvolumina mit oder ohne entsprechende Drucksensoren verwendet wird, und/oder
wobei, vorzugsweise, unterschiedliche Adapter unterschiedlich kodiert sind und die Kodierung des jeweils verwendeten Adapters von der Dichtigkeits-Prüfeinrichtung automatisch erfasst wird.

7. Verfahren nach einem der Ansprüche 1 bis 6, **dadurch gekennzeichnet, dass** vor dem Verfahrensschritt a) an der Dichtigkeits-Prüfeinrichtung eine Einstellung auf die Pipette und/oder Pipettenspitzen vorgenommen wird oder mit einem Lesegerät an der Dichtigkeits-Prüfeinrichtung eine Kodierung an der Pipette und/oder Pipettenspitzen erfasst wird, mit der Steuereinrichtung die Kodierung mit denen im Datenspeicher gespeicherten Kodierungen verglichen wird und die entsprechende Einstellung ermittelt wird,
wobei, vorzugsweise, dabei zur Einstellung auf die Pipette und/oder Pipettenspitzen aus Werten verschiedener bekannter Pipetten aus dem Datenspeicher der Dichtigkeits-Prüfeinrichtung ausgewählt wird.

8. Verfahren nach einem der Ansprüche 1 bis 7, **dadurch gekennzeichnet, dass** vor dem Verfahrensschritt a) folgende Verfahrensschritte ablaufen:

h) Die interessierende, zu der zu prüfenden Pipette passende Pipettenspitze als solche wird an die Dichtigkeits-Prüfeinrichtung angeschlossen.
i) Ohne eine an die Pipettenspitze angeschlossene Pipette wird mittels der Dichtigkeits-Prüfeinrichtung das Anschlussvolumen bei laufender Vakuumpumpe auf einen sich einstellenden Gleichgewichtsdruck unterhalb des Atmosphärendrucks evakuiert.
k) Aus dem sich einstellenden Gleichgewichtsdruck wird mittels der Steuereinrichtung der Spitzentyp und darüber der Messdruck und ggf. ein zulässiger Druckanstieg ermittelt und als Referenzwert gespeichert oder zur Auswahl eines gespeicherten Referenzwertes genutzt.

9. Verfahren nach Anspruch 8, **dadurch gekennzeichnet,**
**dass** vor dem Verfahrensschritt c) die Pipette und/oder Pipettenspitzen von der Dichtigkeits-Prüfeinrichtung erkannt wird und die Werte aus dem Datenspeicher automatisch ausgewählt werden oder
**dass** mit der Zeitdauer für das Evakuieren des Anschluss- und des Totvolumens der Pipette und ggf. dem Vergleich mit dem wiederholten Evakuieren eines parallel zu der Pipette angeschlossenen Zusatzvolumens bekannter Größe die Pipette ermittelt und ausgewählt wird oder
**dass** der Messdruck in Abhängigkeit des Nenn-, Anschluss- und Zusatzvolumens sowie des Spitzentyps bestimmt wird.

10. Dichtigkeits-Prüfeinrichtung die dazu ausgelegt ist die Dichtigkeitsprüfung von handgehaltenen, einkanaligen oder mehrkanaligen Kolbenhubpipetten, vorzugsweise solchen mit Luftpolster, vorzunehmen,
mit einer Vakuumpumpe (5) oder mit einer Vakuumpumpe (5) und einem der Vakuumpumpe (5) ansaugseitig vorgeschalteten Ventil (7), einer Aufnahme (8) zum abgedichteten Anschließen einer auf eine Pipette aufzusteckenden Pipettenspitze (3) oder mehreren Aufnahmen (8) zum gleichzeitigen abgedichteten Anschließen mehrerer Pipettenspitzen (3), einem Leitungssystem (9) zwischen Aufnahme (8) und Vakuumpumpe (5) oder Ventil (7), einer elektronischen Steuereinrichtung (10), einem der elektronischen Steuereinrichtung (10) zugeordneten Datenspeicher (11), einem messtechnisch an das Leitungssystem (9) angeschlossenen und auswertungstechnisch an die Steuereinrichtung (10) angeschlossenen Drucksensor (12) und einer Anzeigeeinrichtung (13), wobei das Leitungssystem (9) mit anschließenden Abschnitten der Dichtigkeits-Prüfeinrichtung ein bestimmtes Anschlussvolumen bildet.

11. Einrichtung nach Anspruch 10, **dadurch gekennzeichnet,**
**dass** die an die Aufnahme (8) angeschlossene Pipettenspitze (3) mit Kolbenhubpipette (2) sowie das Anschlussvolumen im Leitungssystem (9) auf einen Messdruck unterhalb des Atmosphärendrucks mittels der Vakuumpumpe (5) evakuierbar ist,

**dass** bei angehaltener oder abgekoppelter Vakuumpumpe (5) und abgedichtetem Anschlussvolumen mittels des Drucksensors (12) der Druck im Anschlussvolumen während einer bestimmten Zeitspanne und/oder nach einer bestimmten Zeitspanne messbar und mittels der Steuereinrichtung (10) ein eventueller Druckanstieg ermittelbar ist,

**dass** schließlich aus dem ermittelten Druckanstieg mittels der Anzeigeeinrichtung (13) die Pipette als hinreichend dicht/gebrauchsfähig oder nicht hinreichend dicht/nicht gebrauchsfähig bewertbar ist oder

**dass** der ermittelte Druckanstieg mittels der Steuereinrichtung (10) mit einem im Datenspeicher (11) gespeicherten Referenzwert oder dort gespeicherten Referenzwerten vergleichbar ist und abhängig von dem Ergebnis dieses Vergleichs mittels der Anzeigeeinrichtung (13) die Pipette als hinreichend dicht/gebrauchsfähig oder nicht hinreichend dicht/nicht gebrauchsfähig bewertbar ist.

**12.** Einrichtung nach Anspruch 11, **dadurch gekennzeichnet,**

**dass** die Bewertung der Dichtigkeit der Kolbenhubpipette (2) mit der Pipettenspitze (3) mittels der Anzeigeeinrichtung (13) nur digital erfolgt, und/oder als optische Anzeige, insbesondere mit verschiedenen Symbolen, Farben und/oder Leuchtmitteln, ausgeführt ist, und/oder

akustisch arbeitet, insbesondere mit Tönen unterschiedlicher Frequenz, wobei die Anzeige vorzugsweise nur zwei oder drei Anzeigestufen aufweist.

**13.** Einrichtung nach einem der Ansprüche 10 bis 12, **dadurch gekennzeichnet,**

**dass** die Dichtigkeits-Prüfeinrichtung (1) für Pipetten und Pipettenspitzen mit einem Nennvolumen zwischen 10 μl und 10 ml ein ein Anschlussvolumen vergrößerndes, durch ein Ventil (18, 18', 18") zuschaltbares Zusatzvolumen (17, 17', 17") zwischen etwa 1,0 ml und etwa 200 ml aufweist,

wobei, insbesondere, das Anschlussvolumen der Dichtigkeits-Prüfeinrichtung (1) auf das Totvolumen des zu prüfenden Systems Pipette (2)/Pipettenspitze (3) abgestimmt ist, und/oder

wobei, vorzugsweise, im Anschluss- und/oder Zusatzvolumen eine die Temperatur des Gasvolumens stabilisierende Masse angeordnet ist, deren Oberflächen/Volumen-Verhältnis vorzugsweise größer als 3, insbesondere größer als 20, ist.

**14.** Einrichtung nach einem der Ansprüche 10 bis 13, **dadurch gekennzeichnet,**

**dass** die Aufnahme (8) in einem auswechselbaren Adapter (19) ausgebildet ist, der Teil des Leitungssystems (9) ist, wobei, insbesondere, verschiedene Adapter (19) mit unterschiedlichen Aufnahmen (8) für unterschiedliche Pipettenspitzen (3) im Wesentlichen dasselbe Anschlussvolumen aufweisen, und/oder dass bei einer mehrkanaligen Kolbenhubpipette (2) ein Adapter (19) mit einer entsprechenden Anzahl von Aufnahmen (8) für die mehreren Pipettenspitzen (3) vorgesehen ist,

wobei, vorzugsweise, der Adapter (19) für mehrkanalige Kolbenhubpipetten (2) einzelnen je Pipettenspitze (3) zuschaltbare Anschlussvolumina mit oder ohne entsprechende Drucksensoren (12) aufweist.

**15.** System zur Dichtigkeitsprüfung von handgehaltenen, einkanaligen oder mehrkanaligen Kolbenhubpipetten, vorzugsweise solchen mit Luftpolster, mit einer Dichtigkeits-Prüfeinrichtung (1) und mindestens einem dazu passenden, eine Aufnahme (8) für eine Pipettenspitze (2) aufweisenden Adapter (19), der mit der Dichtigkeits-Prüfeinrichtung (1) auswechselbar verbindbar ist,

**dadurch gekennzeichnet,**

**dass** die Dichtigkeits-Prüfeinrichtung (1) nach einem der Ansprüche 10 bis 14 ausgeführt ist.

**Claims**

**1.** Method for leak-testing hand-held, single-channel or multi-channel piston stroke pipettes, preferably those with an air cushion, with the following method steps:

a) fitting onto the pipette a pipette tip matching this pipette,

b) connecting the pipette tip to a leak-testing apparatus, which has a vacuum pump, a pressure sensor and an indicating device,

c) using the leak-testing apparatus to evacuate the pipette with the pipette tip and also a connection volume in the leak-testing apparatus to a measurement pressure below atmospheric pressure by means of a vacuum pump,

d) with the vacuum pump stopped or disconnected, and with the connection volume sealed, using the pressure sensor to measure the pressure in the connection volume during a specific time period and/or after a specific time period and using an electronic control device to determine a possible rise in pressure,

e) depending on the rise in pressure determined in step d), using the indicating device to assess the pipette as to whether it is sufficiently tight/usable or insufficiently tight/unusable,

as an alternative to method step e):

f) using the control device to compare the predetermined rise in pressure with a reference value stored in a data memory or reference values stored there,

g) depending on the result of the comparison in method step f), using the indicating device to assess the pipette as to whether it is sufficiently tight/usable or insufficiently tight/unusable.

2. Method according to Claim 1, **characterized in that**, in method step e) or g), depending on the pipette, a rise in pressure of about 0.1 hPa to about 50 hPa is assessed as admissible and/or
**in that** the assessment in method step e) or g) by means of the indicating device is performed only digitally and/or
optically, in particular with various symbols, colours and/or luminous means, and/or
acoustically, in particular with tones of differing frequency.

3. Method according to Claim 1 or 2, **characterized in that**, in method step c), a measurement pressure of approximately 20 hPa to approximately 300 hPa, preferably approximately 50 to 150 hPa, below atmospheric pressure is used, and/or
**in that**, in method step c), the measurement pressure is chosen such that the piston movement of the pipette in the intake direction is possible, and/or
**in that**, in method step d), a time period of about 3 s to about 60 s, preferably of about 5 s to 20 s, is used.

4. Method according to one of Claims 1 to 3, **characterized in that** a leak-testing apparatus that can have its connection volume increased by supplementary connecting one or more additional volumes of between approximately 1.0 ml and approximately 200 ml by a valve is used for pipettes and pipette tips with a rated volume of between 10 µl and 10 ml, in particular in method step c),
wherein, preferably, the connection volume of the leak-testing apparatus is made to match the dead volume of the system to be tested comprising the pipette/pipette tip and the connection volume is charged by one or more additional volumes with volumes of different sizes,
wherein, more preferably, no more air is admitted to the additional volume of the leak-testing apparatus after evacuation for the first time in method step c).

5. Method according to one of Claims 1 to 4, **characterized in that**, in method step b), an adapter that is made to match the respectively used pipette tip is used, wherein, in particular, the adapters for different pipette tips have the same connection volume.

6. Method according to Claim 5, **characterized in that**, in the case of a multi-channel piston stroke pipette, an adapter with the corresponding number or a fraction of the number of holders for the pipette tips is used,
wherein, preferably, an adapter with individual connection volumes that can be supplementarily connected for each pipette tip, with or without corresponding pressure sensors, is used, and/or
wherein, preferably, different adapters are differently coded and the coding of the respectively used adapter is automatically detected by the leak-testing apparatus.

7. Method according to one of Claims 1 to 6, **characterized in that**, before method step a), the leak-testing apparatus is adjusted to the pipette and/or pipette tips or a reader on the leak-testing apparatus is used to detect a coding on the pipette and/or pipette tips, the control device is used to compare the coding with the codings stored in the data memory and the corresponding adjustment is determined,
wherein, preferably, a selection is made from values of various known pipettes from the data memory of the leak-testing apparatus for the adjustment to the pipette and/or pipette tips.

8. Method according to one of Claims 1 to 7, **characterized in that**, before method step a), the following method steps are taken:

h) the pipette tip of interest, matching the pipette to be tested, as such is connected to the leak-testing apparatus,
i) without a pipette connected to the pipette tip and with the vacuum pump running, the connection volume is evacuated by means of the leak-testing apparatus to an autogenous equilibrium pressure below atmospheric pressure,
k) the control device is used to determine from the autogenous equilibrium pressure the type of tip, and thereby the measurement pressure and possibly an admissible rise in pressure, which is/are stored as a reference value or used for selecting a stored reference value.

9. Method according to Claim 8, **characterized in that**, before method step c), the pipette and/or pipette tips is/are detected by the leak-testing apparatus and the values are automatically selected from the data memory or
**in that** the pipette is determined and selected on the basis of the time period for the evacuation of the connection volume and the dead volume of the pipette, and possibly the comparison with the repeated evacuation of an additional volume of a known size connected in parallel with the pipette, or
**in that** the measurement pressure is determined in dependence on the rated volume, connection volume and additional volume and also the type of tip.

10. Leak-testing apparatus designed to perform leak-testing of hand-held, single-channel or multi-channel piston stroke pipettes, preferably those with an air cushion,

with a vacuum pump (5) or with a vacuum pump (5) and a valve (7) connected upstream of the vacuum pump (5) on the intake side, a holder (8) for the sealed connection of a pipette tip (3) to be fitted onto a pipette or a number of holders (8) for the simultaneous sealed connection of a number of pipette tips (3), a system of lines (9) between the holder (8) and the vacuum pump (5) or the valve (7), an electronic control device (10), a data memory (11) assigned to the electronic control device (10), a pressure sensor (12), connected in technical measuring-related terms to the system of lines (9) and connected in technical evaluation-related terms to the control device (10), and an indicating device (13), wherein the system of lines (9) forms a specific connection volume with adjoining portions of the leak-testing apparatus.

11. Apparatus according to Claim 10, **characterized in that** the pipette tip (3), connected to the holder (8), with the piston stroke pipette (2) and also the connection volume in the system of lines (9) can be evacuated to a measurement pressure below atmospheric pressure by means of the vacuum pump (5), **in that**, with the vacuum pump (5) stopped or disconnected, and with the connection volume sealed, the pressure in the connection volume can be measured by means of the pressure sensor (12) during a specific time period and/or after a specific time period and a possible rise in pressure can be determined by means of the control device (10),

    **in that** finally, from the determined rise in pressure, the pipette can be assessed by means of the indicating device (13) as to whether it is sufficiently tight/usable or insufficiently tight/unusable, or

    **in that** the determined rise in pressure can be compared by means of the control device (10) with a reference value stored in the data memory (11) or reference values stored there and, depending on the result of this comparison, the pipette can be assessed by means of the indicating device (13) as to whether it is sufficiently tight/usable or insufficiently tight/unusable.

12. Apparatus according to Claim 11, **characterized in that** the assessment of the tightness of the piston stroke pipette (2) with the pipette tip (3) by means of the indicating device (13) is performed only digitally and/or

    as an optical indication, in particular with various symbols, colours and/or luminous means, and/or operates acoustically, in particular with tones of differing frequency,

    wherein the indication preferably has only two or three indicating stages.

13. Apparatus according to one of Claims 10 to 12, **characterized**

**in that** the leak-testing apparatus (1) has an additional volume (17, 17', 17") of between approximately 1.0 ml and approximately 200 ml that can be supplementarily connected by a valve (18, 18' 18"), thereby increasing a connection volume, for pipettes and pipette tips with a rated volume of between 10 $\mu$l and 10 ml,

wherein, in particular, the connection volume of the leak-testing apparatus (1) is made to match the dead volume of the system to be tested comprising the pipette (2)/pipette tip (3), and/or

wherein, preferably, a mass that stabilizes the temperature of the gas volume and the surface/volume ratio of which is preferably greater than 3, in particular greater than 20, is arranged in the connection volume and/or additional volume.

14. Apparatus according to one of Claims 10 to 13, **characterized**

    **in that** the holder (8) is formed in an exchangeable adapter (19), which is part of the system of lines (9), wherein, in particular, various adapters (19) with different holders (8) for different pipette tips (3) have substantially the same connection volume, and/or

    **in that**, in the case of a multi-channel piston stroke pipette (2), an adapter (19) with a corresponding number of holders (8) for the number of pipette tips (3) is provided,

    wherein, preferably, the adapter (19) for multi-channel piston stroke pipettes (2) has individual connection volumes that can be supplementarily connected for each pipette tip (3), with or without corresponding pressure sensors (12).

15. System for leak-testing hand-held, single-channel or multi-channel piston stroke pipettes, preferably those with an air cushion, with

    a leak-testing apparatus (1) and at least one matching adapter (19), which has a holder (8) for a pipette tip (2) and can be exchangeably connected to the leak-testing apparatus (1),

    **characterized**

    **in that** the leak-testing apparatus (1) is configured according to one of Claims 10 to 14.

## Revendications

1. Procédé de vérification de l'étanchéité de pipettes à piston manuelles, à un ou plusieurs canaux, de préférence de pipettes à coussin d'air, le procédé présentant les étapes suivantes :

    a) une pointe de pipette adaptée à la pipette est placée sur cette pipette,
    b) la pointe de pipette est raccordée à un dispositif de vérification d'étanchéité qui présente une pompe aspirante, un capteur de pression et un dispositif d'affichage,

c) au moyen du dispositif de vérification d'étanchéité, la pipette dotée de la pointe de pipette ainsi qu'un volume de raccordement sont mis sous vide dans le dispositif de vérification d'étanchéité au moyen d'une pompe aspirante, jusqu'à une pression de mesure inférieure à la pression atmosphérique,

d) la pompe aspirante étant maintenue raccordée ou étant débranchée et le volume de raccordement étant fermé de manière étanche, la pression qui règne dans le volume de raccordement est mesurée au moyen du capteur de pression pendant une durée définie et/ou après une durée définie et une augmentation éventuelle de pression est déterminée au moyen d'un dispositif électronique de commande,

e) en fonction de l'augmentation de pression déterminée à l'étape d) du procédé, la pipette est évaluée au moyen du dispositif d'affichage comme suffisamment étanche et utilisable ou non suffisamment étanche et non utilisable et en variante à l'étape e) du procédé

f) l'augmentation de pression déterminée est comparée au moyen du dispositif de commande à une valeur de référence ou à des valeurs de référence conservées dans une mémoire de données,

g) en fonction du résultat de la comparaison exécutée à l'étape f) du procédé, la pipette est évaluée au moyen du dispositif d'affichage comme étant suffisamment étanche et utilisable ou non suffisamment étanche et non utilisable.

2. Procédé selon la revendication 1, **caractérisé en ce qu'**à l'étape e) ou à l'étape g) du procédé, une augmentation de pression d'environ 0,1 hPa à environ 50 hPa est évaluée comme admissible en fonction de la pipette et/ou
**en ce que** l'évaluation effectuée à l'étape e) ou à l'étape g) du procédé est réalisée au moyen du dispositif d'affichage uniquement numériquement et/ou visuellement, en particulier par différents symboles, différentes couleurs et/ou différents moyens d'éclairage, et/ou acoustiquement, en particulier par des sondes de différentes fréquences.

3. Procédé selon les revendications 1 ou 2, **caractérisé en ce qu'**à l'étape c) du procédé, on travaille à une pression de mesure d'environ 20 hPa à 300 hPa et de préférence d'environ 50 à 150 hPa en dessous de la pression atmosphérique et/ou **en ce qu'**à l'étape c) du procédé, la pression de mesure est sélectionnée de telle sorte que le piston de la pipette puisse se déplacer dans la direction d'aspiration et/ou **en ce qu'**à l'étape d) du procédé, on travaille à une durée d'environ 3 s à environ 60 s et de préférence d'environ 5 s à 20 s.

4. Procédé selon l'une des revendications 1 à 3, **caractérisé en ce que** pour des pipettes et des pointes de pipettes dont le volume nominal est compris entre 10 $\mu$m et 10 ml, on travaille avec un dispositif de vérification d'étanchéité dont le volume de raccordement peut être agrandi en ajoutant à l'aide d'une soupape, en particulier à l'étape c) du procédé, un ou plusieurs volumes supplémentaires compris entre environ 1,0 ml et environ 200 ml, le volume de raccordement du dispositif de vérification d'étanchéité étant de préférence accordé au volume mort du système pipette/pointe de pipette à tester et le volume de raccordement étant modifié par addition d'un ou plusieurs volumes supplémentaires différents, le volume supplémentaire du dispositif de vérification d'étanchéité n'étant toujours de préférence plus alimenté en air après la première mise sous vide réalisée à l'étape c) du procédé.

5. Procédé selon l'une des revendications 1 à 4, **caractérisé en ce qu'**à l'étape b) du procédé, on utilise un adaptateur accordé à la pointe de pipette particulière utilisée, les adaptateurs prévus pour différentes pointes de pipettes présentant en particulier le même volume de raccordement.

6. Procédé selon la revendication 5, **caractérisé en ce que** dans le cas d'une pipette à piston et plusieurs canaux, on utilise un adaptateur présentant un nombre de logements correspondant à celui des pointes de pipettes ou à une fraction de ce nombre, un adaptateur qui présente différents volumes de raccordement qui peuvent être raccordés à chaque pointe de pipette étant de préférence utilisé, avec ou sans capteur de pression respectif, et/ou les différents adaptateurs étant de préférence codés de manière différente et le codage de chaque adaptateur utilisé étant saisi automatiquement par le dispositif de vérification d'étanchéité.

7. Procédé selon l'une des revendications 1 à 6, **caractérisé en ce qu'**avant l'étape a) du procédé, on réalise un réglage du dispositif de vérification d'étanchéité pour la pipette et/ou la pointe de pipette ou on saisit à l'aide d'un appareil de lecture du dispositif de vérification d'étanchéité le codage apposé sur la pipette et/ou la pointe de pipette, on compare à l'aide du dispositif de commande le codage à des codages conservés dans la mémoire de données et on détermine le réglage correspondant, et pour le réglage à la pipette et/ou à la pointe de pipette, on sélectionne de préférence les valeurs de différentes pipettes connues dans la mémoire de données du dispositif de vérification d'étanchéité.

8. Procédé selon l'une des revendications 1 à 7, **ca-**

**ractérisé en ce qu'**avant l'étape a) du procédé, les étapes suivantes sont exécutées :

h) la pointe de pipette concernée, adaptée à la pipette à vérifier, est raccordée au dispositif de vérification d'étanchéité,

i) sans pipette raccordée à la pointe de pipette, on met sous vide le volume de raccordement au moyen du dispositif de vérification d'étanchéité, la pompe aspirante étant en fonctionnement, jusqu'à établissement d'une pression d'équilibre située en dessous de la pression atmosphérique et

k) à partir de la pression d'équilibre qui s'est établie, le type de pointe et donc la pression de mesure et éventuellement une augmentation admissible de pression sont déterminés au moyen du dispositif de commande et conservés en mémoire comme valeurs de référence ou utilisés pour la sélection d'une valeur de référence conservée en mémoire.

9. Procédé selon la revendication 8, **caractérisé en ce qu'**avant l'étape c) du procédé, la pipette et/ou la pointe de pipette sont reconnues par le dispositif de vérification d'étanchéité et les valeurs sont sélectionnées automatiquement dans la mémoire de données, **en ce qu'**on détermine et on sélectionne la pipette par la durée de mise sous vide du volume de raccordement et du volume mort de la pipette et éventuellement par la comparaison avec la mise sous vide répétée d'un volume supplémentaire de grandeur connue raccordé en parallèle à la pipette ou **en ce que** la pression de mesure est déterminée en fonction du volume nominal, du volume de raccordement et du volume supplémentaire ainsi que du type de pointe.

10. Dispositif de vérification d'étanchéité conçu pour exécuter une vérification d'étanchéité de pipettes à piston manuelles, à un ou plusieurs canaux, de préférence à coussin d'air, le dispositif présentant :

une pompe aspirante (5) ou une pompe aspirante (5) et une soupape (7) raccordée en amont sur le côté aspiration de la pompe aspirante (5), un logement (8) permettant le raccordement étanche d'une pointe (3) de pipette à placer sur une pipette ou plusieurs logements (8) permettant de raccorder de manière étanche et simultanément plusieurs pointes (3) de pipette, un système (9) de conduits entre les logements (8) et la pompe aspirante (5) ou la soupape (7), un dispositif électronique de commande (10), une mémoire de données (11) associée au dispositif électronique de commande (10), un capteur de pression (12) raccordé pour mesure au système (9) de conduits et raccordé pour évaluation au dispositif de commande (10) et

un dispositif d'affichage (13), le système (9) de conduits formant avec les parties raccordées du dispositif de vérification d'étanchéité un volume de raccordement défini.

11. Dispositif selon la revendication 10, **caractérisé en ce que**

la pointe (3) de pipette raccordée au logement (8) et la pipette (2) à piston ainsi que le volume de raccordement du système (9) de conduits sont mis en dépression à une pression de mesure inférieure à la pression atmosphérique au moyen de la pompe aspirante (5),

**en ce que**, la pompe aspirante (5) étant maintenue raccordée ou débranchée et le volume de raccordement étant fermé hermétiquement, la pression qui règne dans le volume de raccordement peut être mesurée au moyen du capteur de pression (12) pendant une durée définie et/ou après une durée définie et une augmentation éventuelle de pression peut être déterminée au moyen du dispositif de commande (10),

**en ce qu'**après que l'augmentation de pression a été déterminée au moyen du dispositif d'affichage (13), la pipette peut être évaluée comme suffisamment étanche et utilisable ou non suffisamment étanche et non utilisable ou

**en ce que** l'augmentation de pression déterminée au moyen du dispositif de commande (10) peut être comparée à une valeur de référence ou à des valeurs de référence conservées dans la mémoire de données (11) et la pipette peut être évaluée au moyen du dispositif d'affichage (13) comme suffisamment étanche et utilisable ou non suffisamment étanche et non utilisable en fonction du résultat de cette comparaison.

12. Dispositif selon la revendication 11, **caractérisé en ce que** l'évaluation de l'étanchéité de la pipette (2) à piston et de la pointe de pipette (3) par le dispositif d'affichage (13) s'effectue uniquement numériquement et/ou visuellement, en particulier par différents symboles, différentes couleurs et/ou différents moyens d'éclairage, et/ou acoustiquement, en particulier par des sondes de différentes fréquences, l'affichage présentant de préférence uniquement deux ou trois niveaux d'affichage.

13. Dispositif selon l'une des revendications 10 à 12, **caractérisé en ce que** pour des pipettes et des pointes de pipette dont le volume nominal est compris entre 10 μm et 10 ml, le dispositif (1) de vérification d'étanchéité présente un volume de raccordement qui peut être agrandi en ajoutant à l'aide d'une soupape (18, 18', 18") un ou plusieurs volumes supplémentaires (17, 17', 17") compris entre environ 1,0 ml et environ 200 ml, le volume de raccordement du dispositif (1) de vérification d'étanchéité étant accordé au volume mort du système pipette (2)/pointe (3) de pipette à tester et/ou **en ce qu'**une masse dont le rapport surface/volume est de préférence supérieur à 3 et en particulier supérieur à 20 et qui stabilise la température du volume de gaz est disposée de préférence dans le volume de raccordement et/ou le volume supplémentaire.

14. Dispositif selon l'une des revendications 10 à 13, **caractérisé en ce que** le logement (8) est formé dans un adaptateur (19) échangeable qui fait partie du système (9) de conduits, en particulier **en ce que** différents adaptateurs (19) avec différents logements (8) pour différentes pointes (3) de pipettes présentent essentiellement le même volume de raccordement et/ou **en ce que** dans le cas d'une pipette (2) à piston et plusieurs canaux, un adaptateur (19) qui présente un nombre correspondant de logements (8) est prévu pour différentes pointes de pipette (3), l'adaptateur (19) prévu pour des pipettes (2) à piston et plusieurs canaux présentant pour chaque pointe de pipette (3) différents volumes de raccordement aptes à être raccordés et présentant ou non des capteurs de pression (12) correspondants.

15. Système de vérification d'étanchéité de pipettes à piston manuelles, à un ou plusieurs canaux, de préférence à coussin d'air, présentant un dispositif (1) de vérification d'étanchéité et au moins un adaptateur (19) qui y est adapté, qui présente un logement (8) pour une pointe (2) de pipette et apte à être raccordé de manière échangeable au dispositif (1) de vérification d'étanchéité,
**caractérisé en ce que**
le dispositif (1) de vérification d'étanchéité est configuré selon l'une des revendications 10 à 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3903241 A1
- DE 10013511 A1
- DE 69326773 T2
- DE 8230186 U1
- DE 3903142 A1
- DE 19911397 A